Europäisches Patentamt

European Patent Office

Office européen des brevets

(11) Publication number: **0 054 411**
**B1**

## EUROPEAN PATENT SPECIFICATION

(45) Date of publication of patent specification: **23.10.85**

(51) Int. Cl.⁴: **G 02 F 1/01,** G 02 B 6/26

(21) Application number: **81305823.7**

(22) Date of filing: **10.12.81**

(54) **Optical arrangement for optically coupling optical fibres.**

(30) Priority: **15.12.80 JP 176687/80**

(43) Date of publication of application:
**23.06.82 Bulletin 82/25**

(45) Publication of the grant of the patent:
**23.10.85 Bulletin 85/43**

(84) Designated Contracting States:
**DE FR GB IT**

(56) References cited:
**DE-A-2 931 474**
**US-A-3 719 414**
**US-A-4 103 260**
**US-A-4 178 073**

(73) Proprietor: **FUJITSU LIMITED**
**1015, Kamikodanaka Nakahara-ku**
**Kawasaki-shi Kanagawa 211 (JP)**

(72) Inventor: **Shirasaki, Masataka**
**Room 601 Monowa Bldg 1461, Takaishi Tama-Ku**
**Kawasaki-shi Kanagawa 215 (JP)**

(74) Representative: **Sunderland, James Harry et al**
**HASELTINE LAKE & CO Hazlitt House 28**
**Southampton Buildings Chancery Lane**
**London WC2A 1AT (GB)**

## Description

The present invention relates to an optical arrangement for optically coupling optical fibres, such as an optical isolator or an optical modulator.

Optical fibre communication systems are now in practical use, and efforts are being made to advance research and development in this field. There is an increased need for more versatile optical devices for use in this field. For example, optical circulators are required for two-way communications. Since optical polarisation cannot in general be preserved in optical fibres, it is thought preferable to develop optical circulators the characteristics of which are not affected by incident light polarisation.

An optical isolator is used as a functional component in light transmission systems to provide for one way transmission of light.

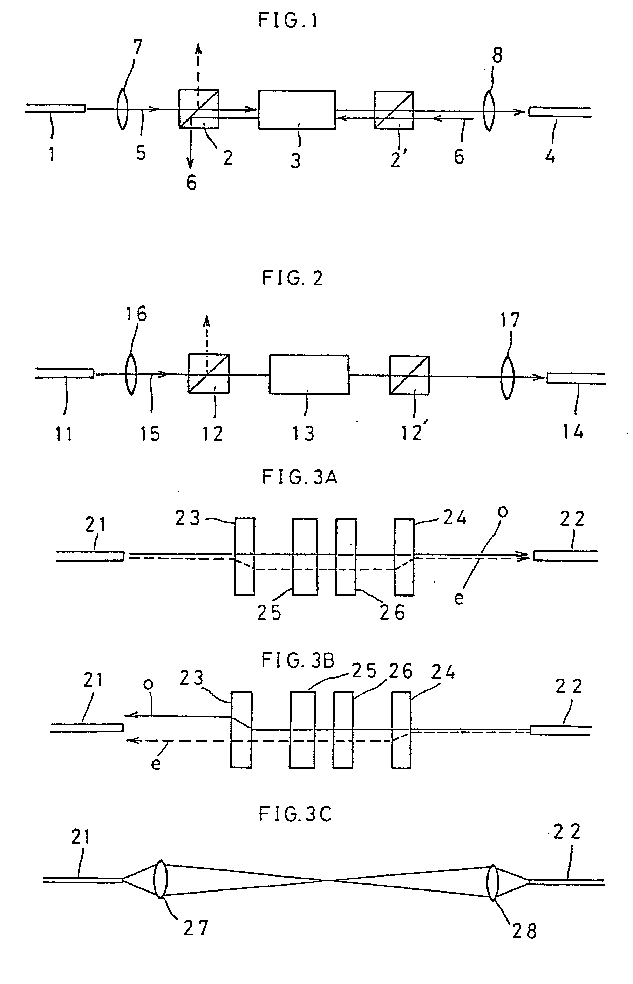

A typical isolator is schematically illustrated in Figure 1 of the accompanying drawings. The isolator comprises a 45° Faraday rotation isolator 3 which always causes rotation of the direction of the plane of polarisation of light in one sense by virtue of a permanent magnet. A polariser 2 and an analyser 2' are placed before and after the Faraday rotation isolator 3, with the polariser 2 and the analyser 2' being maintained with their polarising axes at relative positions rotated 45° with respect to one another.

Light emitted from an optical fibre 1 is divided or separated into parallel beams by a lens 7, and of the parallel beams 5, the polariser 2 allows only light polarised in a particular direction to pass through it; any other light is reflected and eliminated. Polarised light that has passed through the polariser 2 emanates from the Faraday rotation isolator with its plane of polarisation rotated by 45°.

Analyser 2' is so arranged that polarised light with its plane of polarisation so rotated by 45° passes therethrough, is focused by a lens 8 and enters an optical fibre 4.

On the other hand, of light 6, travelling in the reverse direction, coming from the optical fibre 4, only polarised light which has its plane of polarisation rotated by 45° relative to the polarising axis of polariser 2 may pass through the analyser 2'. Polarised light that has passed through the analyser 2' will have its plane of polarisation rotated 45° by the Faraday rotation isolator 3 upon emergence from the isolator 3. Thus, polarised light 6 the plane of polarisation of which is rotated by 90° relative to the polariser 2 emerges from the isolator 3 and this light is reflected by the polariser 2 and eliminated.

Because of this, light can propagate in the forward direction, whilst light travelling in the reverse direction is eliminated. However, the isolator just described is polarisation dependent even with respect to light in the forward direction. In other words, only light of a specific polarisation can pass through the isolator in the forward direction, and other light is not effectively utilised because it is eliminated.

A phase difference—light intensity converter is used to convert a phase difference caused by a phase difference modulator (such as a Faraday rotation isolator, which brings about rotation of the plane of polarisation, or an electro-optic device, which brings about elliptical polarisation) to transmission light intensity.

A previously proposed converter is schematically illustrated in Figure 2 of the accompanying drawings. The device of Figure 2 employs a polariser 12 and an analyser 12'. In a case in which an electrooptic device is used for phase difference modulation there is provided a phase difference modulator 13 which functions such that a phase difference is provided between two mutually orthogonally polarised components of light in response to an externally applied electrical input signal, with polariser 12 and analyser 12' placed before and after the modulator 13. Polarisation axes of polariser 12 and analyser 12' are maintained at a predetermined angle θ with respect to each other, which angle θ depends upon the usage of the device.

Light emitted from an optical fibre 11 is collimated into parallel beams by a first lens 16. Only a component of beam 15 linearly polarised in a particular direction is allowed to pass through the polariser 12; all other light is reflected and eliminated. Linearly polarised light passed through the polariser 12 emerges from the converter 13 with elliptical polarisation. Of this light, only light linearly polarised in the direction of the principle axis of the analyser 12' passes through the analyser 12' to be focused by a second lens 17 and to enter an optical fibre 14.

Therefore, where only a light component having its plane of polarisation rotated by an angle (polarisation plane rotation angle) θ (or θ+π/2), by the converter 13, enters the optical fibre 14, a component having a polarisation plane rotation angle θ+π/2 (or θ) is reflected by the analyser 12' and does not enter the optical fibre 14. Thus, what is shown is a device converting phase difference to light intensity which allows a component having a polarisation plane rotation angle θ to pass therethrough.

However, the device just described is polarisation dependent relative to incident light from the optical fibre 11. That is, of the incident light, only the component having a specific polarisation plane is allowed to pass through the polariser 12, with all other light eliminated and not utilised at all.

JP—A—149046—78, published on 26 December 1978, concerns an invention entitled "Optical Isolator". That isolator comprises first and second birefringent crystals with a Faraday rotator interposed therebetween. The Faraday rotator is characterised in that it rotates the polarisation direction of each polarised beam by $(2m\pm1/2)\times90°$ and $(2n\pm1/2)\times90°$, where $m$ and $n$ are arbitrary integers, and that it is a non-reversible light rotating device.

JP—A—79060—79, published on 23 June 1979, discloses an invention entitled "Optical Modulator". This modulator comprises a first crystal member which is capable of rotating the plane of polarisation of a light beam by as much as 90° when an electric voltage is applied thereto, and it is interposed between second and third birefringent crystal members of one polarity. The faces of the second and third crystal members placed in the path of the light are arranged in parallel, with the optical axes of the second and third crystal members so inclined relative to the said faces that an ordinary ray and an extraordinary ray form a predetermined angle therebetween. Luminous flux of light entering the second crystal member is emitted therefrom as an ordinary ray and an extraordinary ray separated from each other by a predetermined distance, the ordinary ray and the extraordinary ray enter the first crystal member, the direction of polarisation of each ray is rotated by 90° or 0° depending on whether or not an electric voltage is applied to the first crystal member, and the ordinary ray and the extraordinary ray thus rotated or not rotated enter the third crystal member in which, due to its birefringency, these rays are combined or cancelled out at a predetermined position on a face from which those rays emanate, and an output terminal is provided at that position.

In an article entitled "Polarisation-independent isolators for fibre optics", which was carried in the Journal of Denshi Tsushin Gakkai (Electronic Communications Association), 1979/7 Vol. J 62-CNo. 7, pp. 505—512, isolators are described which are schematically illustrated in Figures 3A, 3B and 3C of the accompanying drawings. In these Figures, 21 and 22 are optical fibres, 23 and 24 are birefringent crystals, 25 is a 45° Faraday rotation isolator, and 26 is a 45° rotator which functions as a compensation plate, o denotes an ordinary ray and e denotes an extraordinary ray. It will be clear from Figures 3A and 3B, which relate respectively to passage of light in forward and reverse directions, how the isolator functions.

Although such isolators for fibre optics use are independent of polarisation, a combination of lenses, for forming points of focus, as shown in Figure 3C will be required for their operation because in combining parallel beams, a beam that is slightly shifted and a beam that is not shifted are difficult to distinguish. Because of the lens arrangement required, fibres 21 and 22 must be spaced apart at a considerable distance. This makes miniaturisation of the isolator difficult. In addition, there is a large lens aberration effect in the illustrated arrangement of Figures 3A to 3C, bringing about increase of both insertion loss and cross-talk; for example, insertion loss of the order of 5 dB and cross-talk of the order of −20 dB.

US—A—4 103 260 discloses a transmitter for producing an energy beam, e.g. a laser beam, which has position along a selected dimension encoded thereon as a polarisation state of the energy, e.g. light. The transmitter has two birefringent tapered plates between which an electro-optical device, operable to change the polarisation state of energy passing therethrough, is arranged.

DE—A—2 931 474 discloses an optical isolator for optical coupling two optical fibres. The device has a pair of lenses between the two optical fibres, a pair of birefringent plates between the lenses, with a magneto-optical member and a compensation plate between the plates. The isolator of DE—A—2 931 474 is basically as illustrated in Figures 3A to 3C.

According to the present invention there is provided an optical arrangement for selective optical coupling of opposed ends of two optical fibres of the arrangement, the arrangement further comprising:—

a pair of lenses, disposed in an optical path between the opposed ends of the two optical fibres,

a pair of plates of birefringent material, interposed between the two lenses in the optical path, and

an element, interposed between the two plates, operable to change the planes of polarization of both ordinary and extraordinary ray components of light passing therethrough,

characterised in that:—

the two lenses are disposed so that the opposed ends of the two optical fibres are located at focal positions of the respective lenses, each lens being effective to collimate light emitted from the optical fibre end at a focal position thereof into parallel rays; and

the two plates of birefringent material are tapered plates, operable to separate angularly light of different planes of polarisation and operable to combine angularly light of different planes of polarisation;

and the arrangement is constructed such that when the plane of polarisation of light emerging from one of the tapered plates is rotated by the said element by a first angle, which may be zero, around its direction of travel towards the other tapered plate it emerges from that other tapered plate as parallel rays which are focused onto the core of the optical fibre whose end follows that other tapered plate in the direction of travel of the light, by the lens interposed between the optical fibre end concerned and that other tapered plate,

and such that when the plane of polarization of light emerging from one of the tapered plates is rotated by the said element by a second angle, different by $\pi/2$ from the first angle, and which may be zero in a case in which the first angle is not zero, around its direction of travel towards the other tapered plate it emerges from that other tapered plate as angularly separated rays which are not focused onto the core of the optical fibre whose end follows that other tapered plate in the direction of travel of the light.

The present invention provides an optical arrangement comprising a pair of tapered birefringent plates. An optical isolator or an optical modulator utilising such tapered birefringent plates can be provided.

An embodiment of the present invention can provide an optical arrangement such as an optical isolator or an optical modulator which is polarisation independent.

An embodiment of the present invention can provide an optical arrangement such as an optical isolator or an optical modulator which allows the passage therethrough of 100% of light in the forward direction.

An embodiment of the present invention can provide an optical arrangement such as an optical isolator or an optical modulator which has a simple and compact configuration, with fewer parts than are required in previously proposed devices.

An embodiment of the present invention provides an optical arrangement having an element, for rotating the plane of polarisation of light, interposed between elements which separate and combine polarised light, these separation and combination elements being constituted by tapered plates of birefringent material.

An embodiment of the present invention provides an arrangement for converting phase difference to light intensity.

In more detail an arrangement embodying the present invention, for converting phase difference to light intensity, comprises an optical fibre for delivering light, a first lens, an element able to separate polarised light, a plane of polarisation modulator, an element able to combine polarised light, a second lens, and an optical fibre for receiving light, arranged in the above order in the path of light propagation. The elements able to separate and combine polarised light are constituted by tapered plates of birefringent material. When light from the optical fibre for incident light is focalised by the second lens, light having a polarisation plane rotation angle of $\theta$ (or $\theta+\pi/2$) is introduced into the end face of the light receiving fibre independently of the polarisation of incident light, and light having a polarisation plane rotation angle of $\theta+\pi/2$ (or $\theta$) is so polarised that it is focused at a point which is apart from the principal axis of the light receiving fibre at its end face by a distance which is larger than the core diameter of the optical fibre.

Reference is made, by way of example, to the accompanying drawings, in which:—

Figure 1 schematically illustrates a previously proposed optical isolator,

Figure 2 schematically illustrates a previously proposed phase difference-light intensity converter,

Figures 3A, 3B and 3C schematically illustrate another previously proposed optical isolator,

Figures 4A and 4B schematically illustrate an optical isolator embodying the present invention,

Figure 5 schematically illustrates a phase difference-light intensity converter embodying the present invention,

Figures 6A and 6B are schematic views for assistance in illustrating the working of the converter of Figure 5, and

Figures 7A to 7D are schematic diagrams for assistance in explanation of experiments carried out by the inventor in connection with the present invention.

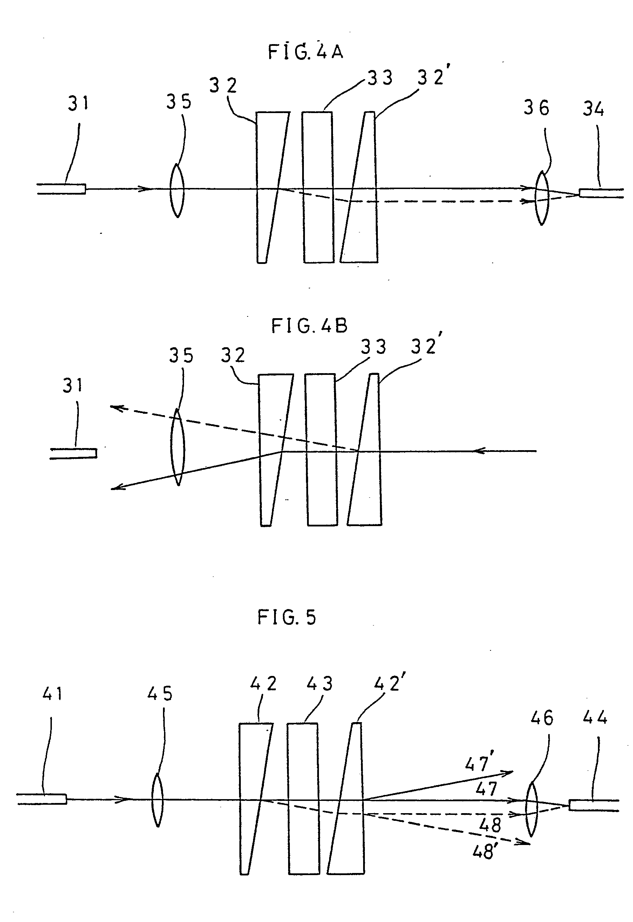

Figures 4A and 4B show an optical isolator embodying the present invention. As will be understood from Figures 4A and 4B, tapered birefringent plates (tapered plates) 32 and 32' are placed to opposite sides of a 45° Faraday rotator 33. When light passes through the birefringent plates 32 and 32', the angles of refraction of an ordinary ray and of an extraordinary ray are different, so that polarisation separation is realised. That is to say, when light travelling in a forward direction (that is, light travelling from left to right in Figure 4A), enters first tapered plate 32, that light is divided and separated into an ordinary ray and an extraordinary ray, because of the difference between indexes of refraction of the birefringement plate for light of different polarisations, and these rays are refracted along different directions. The ordinary and extraordinary rays enter the 45° Faraday rotator 33. The ordinary and extraordinary rays the planes of polarisation of which have been rotated 45° by the Faraday rotator 33 are caused to enter the second tapered plate 32'. It is so arranged that an optical axis of the second tapered plate 32' is rotated 45° around the direction of travel of light relative to an optical axis of the first tapered plate 32. Therefore, the ordinary and extraordinary rays as emerging from the rotator 33 correspond to ordinary and extraordinary rays respectively in the second tapered plate 32'. Because of this, the ordinary ray and the extraordinary ray, after passage through the second tapered plate 32', emerge parallel to one another. These parallel beams of ordinary and extraordinary rays are focused onto an optical fibre 34 by a lens 36.

On the other hand, light travelling in the reverse direction, from right to left in Figure 4B, is divided into ordinary and extraordinary rays, after passage through the second tapered plate 32', which are refracted in different directions. The ordinary and extraordinary rays enter the 45° Faraday rotator and emerge therefrom with their planes of polarisation rotated by 45°.

The ordinary ray from the second plate 32' with its plane of polarisation rotated 45° (by the rotator 33) becomes polarised light which is rotated 90° relative to an optical axis of the first tapered plate 32, which has an optical axis that is offset by −45° relative to the optical axis of the second tapered plate 32', so that it is refracted as an extraordinary ray relative to the first tapered plate 32. On the other hand, the extraordinary ray from the second tapered plate 32' with its plane of polarisation rotated 45° (by the rotator 33) is refracted as an ordinary ray relative to the first tapered plate 32. That is to say, the ordinary ray and extraordinary ray from the second plate 32' are converted into extraordinary ray and ordinary ray respectively for the first plate 32 by the Faraday rotator, so that directions of each of these rays after passing through the first tapered plate 32 are different from that of incident light. Because of this, when those rays are converged by the lens 35, their focal points are formed outside the face of the fibre 31, so that light in the reverse direction does not enter the optical fibre 31.

As will be understood from the foregoing description, when light from an optical fibre is formed into parallel beams and caused to pass through the isolator, tapered birefringent plates are used as polarised light separation elements capable of influencing the direction of travel of light in dependence upon its polarisation. By properly selecting the directions of the optical axes of these plates, polarised light travelling in an arbitrary direction can be divided. Thus, a miniature, polarisation-independent, isolator can be obtained. Further, by slightly slanting the birefringent plate and Faraday rotator with respect to one another it is possible to prevent light reflected by the faces of these elements returning from whence it was emitted.

A polarisation-independent optical isolator, which uses a half-wave plate has been proposed previously. However, according to the invention, an optical isolator is provided which does not use a half-wave plate and which therefore requires a fewer number of components.

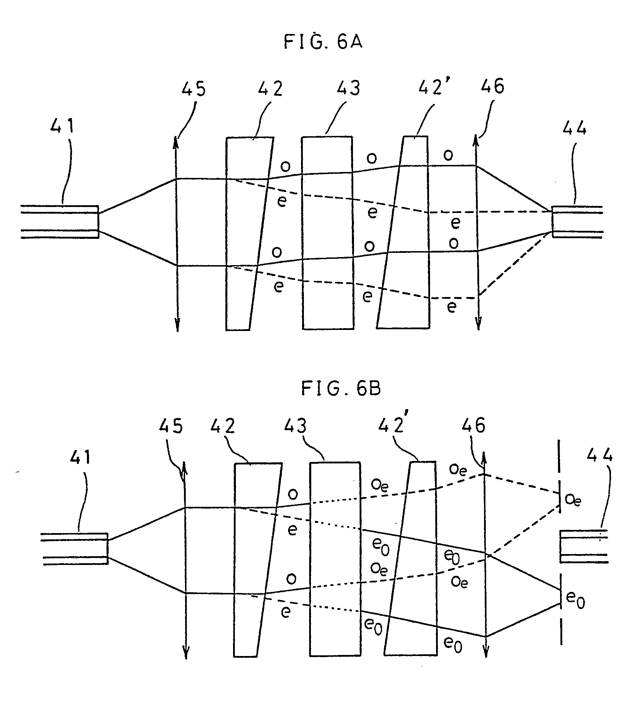

In Figure 5, which shows an optical modulator embodying the present invention, 41 is an optical fibre for incident light, 45 is a first lens, 42 is a tapered plate of birefringent material, for separating or dividing polarised light (a tapered plate), 43 is an element for changing the plane of polarisation, 42' is a tapered plate of birefringent material, for combining polarised light (a tapered plate), the optical axis of which is disposed in a direction rotated, around the path of travel of light, by a given angle $\theta$ (or $\theta+\pi/2$) relative to the optical axis of the plate 42 and which, if made of the same material, has faces parallel to the faces of the tapered plate 42, 46 is a second lens, and 44 is a light receiving optical fibre. 47, 47', 48 and 48' indicate light beams. Figures 6A and 6B illustrate in more detail the paths of light beams in the device of Figure 5.

Where the plane of polarisation is rotated by an angle (polarisation plane rotation angle) $\theta$ (or $\theta+\pi/2$) by the element 43, an ordinary ray $o$ and an extraordinary ray $e$ which are angularly separated by the tapered plate 42 become parallel beams 47, 48 (the angular separation is cancelled by the tapered plate 42'), and when condensed by the second lens 46, both the ordinary ray $o$ and the extraordinary ray $e$ are condensed into the light receiving optical fibre 44 (the paths of light beams in this case are illustrated in Figure 6A).

When the plane of polarisation is rotated by an angle (polarisation plane rotation angle) $\theta+\pi/2$ (or $\theta$) by the element 43, in respect of an ordinary ray $o$ and an extraordinary ray $e$ which are angularly separated by the tapered plate 42, the ordinary ray $o$, given a polarisation plane rotation angle $\theta+\pi/2$ (or $\theta$), behaves as an extraordinary

ray $o_e$ at the tapered plate 42', and the extraordinary ray $e$ given a polarisation plane rotation angle $\theta+\pi/2$ (or $\theta$), behaves as an ordinary ray $e_o$ in the tapered plate 42', and as will be understood from light beams 47' and 48' in Figure 5, angular separation is increased by the tapered plate 42'. Thus, when condensed by the second lens 46, the ordinary ray and the extraordinary ray suffer an angular separation such that the ordinary ray and the extraordinary ray, which have suffered a polarisation plane rotation angle of $\theta+\pi/2$ (or $\theta$), are condensed at a position which is spaced from the axis of optical fibre 44 at the end face of the fibre by a distance larger than the core diameter of the fibre. (The paths of light beams in this case are shown in Figure 6B).

In other words, where focal length is $f$ and core diameter is $a$, an angle $\phi$ of separation provided by the tapered plate 42 and by the tapered plate 42' is the same for both plates (for example, where the two plates are made of the same material and their taper slopes are equal), and its value is given by tan $\phi>a/f$.

Specific explanations will now be given for a case in which an electrooptic crystal is used. Where light passes through the tapered plate 42 and 42', polarisation separation can be effected because the angles of refraction of the ordinary ray and of the extraordinary ray are different. When light enters the first tapered separation element made of birefringent material, light is divided into an ordinary and an extraordinary ray, because the index of refraction differs for different directions of polarisation, which are refracted in different directions and enter the electrooptic device 43, which functions as an element for modulating phase difference.

As an electrooptic crystal, zinc telluride (ZnTe) or gallium arsenide (GaAs), for example, may be used, although the wavelength of light must be taken into consideration. When its crystallographic axis is properly set relative to the direction of polarisation of linearly polarised incident light, each of two orthogonal components of the incident light is of the same phase as the other in the plane of incidence, but in the crystal the phase relationship between those components depends on the voltage applied to the electrooptic crystal, and each component suffers a different index of refraction, depending on its direction of polarisation and the electrooptic effect. A component having its plane of polarisation in the direction of an axis in respect of which the index of refraction is increased by the electrooptic effect travels slowly, whilst a component having its plane of polarisation in the direction of an axis in respect of which the index of refraction is decreased travels fast. As a result, there is a difference in phase, proportionate to the applied voltage, between the two components as they emerge from the crystal, and light composed of these components is generally elliptically polarised.

The ordinary ray and the extraordinary ray, which may be caused to have a phase difference by the electrooptic element, which functions as an element for modulating the phase difference, enter the second tapered plate 42', which is sawed or cut with its optical axis offset by a given angle relative to that of the tapered plate 42 of birefringent material. The optical axis of the second tapered plate is selected such that an angle formed between it and the principal axis of the electrooptic element is equal to an angle formed between the principal axis of the electrooptic element and the optical axis of the first tapered plate and is, for example, 45°.

Thus, for light suffering no rotation of its plane of polarisation by the electrooptic element an ordinary ray and an extraordinary ray correspond respectively to an ordinary ray and an extraordinary ray in the second tapered plate 42', so that the ordinary ray and the extraordinary ray after passing through the tapered plate 42' become light beams 47 and 48 in Figure 5, which are parallel.

On the other hand, for light suffering a 90° rotation of its plane of polarisation by the electro- optic element, an ordinary ray and an extraordinary ray enter the second tapered plate as an extraordinary ray and an ordinary ray respectively, and a separation angle between refracted light beams 47' and 48' is further increased and those light beams do not enter the light receiving optical fibre 44 even when condensed by the second lens 46.

If the light receiving fibre 44 is connected to a power meter at its other end, an output signal corresponding to the applied voltage may be detected by the power meter.

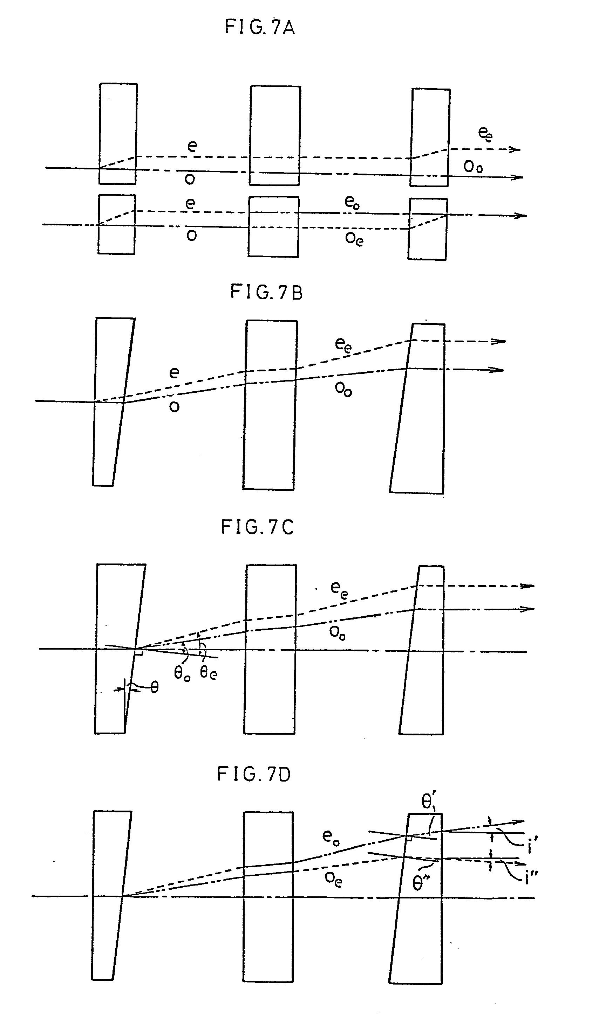

Lastly, with reference to Figures 7A to 7D, there are explained and described results of experiments carried out by the inventor of the present invention in relation to the device of Figure 5. Elements to separate and combine polarised light were made of rutile ($TiO_2$) having indexes of refraction as follows: Ne=2.709 and No=2.451 at $\lambda$=1.53 µm.

Relevant data is found in the following Table.

TABLE

| Optical fiber | Switch to element to change plane of polarization | Taper angle of element to separate polarized light | $\theta o$ | $\theta e$ | $\theta'$ | $\theta''$ | $i'$ | $i''$ |
|---|---|---|---|---|---|---|---|---|
| single mode | OFF | 1° | 2.45° | 2.71° | 1° | 1° | 0° | 0° |
| | ON | 1° | 2.45° | 2.71° | 1.105° | 0.905° | +0.285° | −0.235° |
| multi mode | OFF | 4° | 9.84° | 10.89° | 4° | 4° | 0° | 0° |
| | ON | 4° | 9.84° | 10.89° | 4.42° | 3.62° | +1.138° | −0.931° |

For comparison purposes Figure 7A shows a device in which elements for separating and combining polarised light are not tapered. In the upper part of Figure 7A a case is shown in which, when light travels from left to right, an ordinary ray o and an extraordinary ray e from the left-most element enter the rightmost element as ordinary ray and extraordinary ray respectively. Thereby, these rays $o_o$ and $e_e$ emerge from the rightmost element spaced apart, but parallel to one another. In the lower part of Figure 7A, a case is shown in which, when light travels from left to right, an ordinary ray o and an extraordinary ray e from the leftmost element enter the rightmost element as extraordinary ray $o_e$ and ordinary ray $e_o$ respectively. Thereby these rays coincide upon emergence from the rightmost element. However, it is difficult in practice to distinguish between parallel but spaced apart rays as shown in the upper part of Figure 7A, and a combined ray as shown in the lower part of Figure 7A.

Figure 7B illustrates a case in which tapered elements are employed in accordance with the present invention. Figure 7B relates to a case in which an ordinary ray o and an extraordinary ray e from the leftmost tapered element enters the rightmost tapered element as ordinary ray $o_o$ and extraordinary ray $e_e$ respectively. The rays emerge parallel.

Figures 7C and 7D, to which the data of the table relates, correspond respectively to Figure 7B and to a case in which the ordinary ray and the extraordinary ray from the leftmost tapered element enter the rightmost tapered element as extraordinary ray $o_e$ and ordinary ray $e_o$ respectively, to emerge from the rightmost tapered element in different directions.

The table gives data relating to two types of optical fibre; single mode and multi-mode. It will be noted that for multi-mode the leftmost tapered element has a greater taper angle than for single mode.

The middle element shown in Figures 7C and 7D is an element to change plane of polarisation. When this element is switched OFF the device operates as illustrated in Figure 7C, and when this element is switched ON the device operates as illustrated in Figure 7D. The table gives values as indicated in Figure 7C and 7D for each case.

As will be understood from the foregoing description, where light from an optical fibre is formed into parallel beams by a lens, to be passed through an element for changing the plane of polarisation, a tapered birefringent element is used to separate polarised light, by slightly changing the propagation direction of differently polarised beams, and by properly selecting the direction of the optical axis of that element, polarised light beams travelling in an arbitrary direction, having planes of polarisation crossing at right angles, may be separated or divided. Thereby, a miniaturised polarisation-independent phase difference-light intensity converting element can be realised. Further, by slightly slanting birefringent plates with respect to an element for changing the plane of polarisation, it is possible to prevent return of light reflected at element faces.

If a 45° Faraday rotator is used as an element to change the plane of polarisation, the device acts as an isolator.

An optical device, for example an optical isolator or an optical modulator, embodying the present invention, comprises a 45° Faraday rotator or an electrooptic crystal, interposed between tapered plates of birefringent material for separating and combining polarised light. The optical device is polarisation independent, and can be miniaturised and requires fewer components than previously proposed optical devices. The optical isolator allows 100% of light in the forward direction to pass therethrough. The optical modulator can be used as a voltage sensor. The tapered plates may for example be made of rutile or calcite.

In Figures 7B to 7C the tapered plates may all be of the same thicknesses. Thickness of a tapered plate affects the distance between the points at which an ordinary ray and an extraordinary ray emerge from the tapered plate, but does not affect the angle between those rays.

## Claims

1. An optical arrangement for selective optical coupling of opposed ends of two optical fibres of the arrangement, the arrangement further comprising:—

a pair of lenses, disposed in an optical path between the opposed ends of the two optical fibres,

a pair of plates of birefringent material, interposed between the two lenses in the optical path, and

an element, interposed between the two plates, operable to change the planes of polarization of both ordinary and extraordinary ray components of light passing therethrough,
characterised in that:—

the two lenses are disposed so that the opposed ends of the two optical fibres are located at focal positions of the respective lenses, each lens being effective to collimate light emitted from the optical fibre end at a focal position thereof into parallel rays; and

the two plates of birefringent material are tapered plates, operable to separate angularly light of different planes of polarisation and operable to combine angularly light of different planes of polarisation,

and the arrangement is constructed

such that when the plane of polarisation of light emerging from one of the tapered plates is rotated by the said element by a first angle, which may be zero, around its direction of travel towards the other tapered plate it emerges from that other tapered plate as parallel rays which are focused onto the core of the optical fibre whose end follows that other tapered plate in the direction of travel of the light, by the lens interposed between the optical fibre end concerned and that other tapered plate,

and such that when the plane of polarization of light emerging from one of the tapered plates is rotated by the said element by a second angle, different by π/2 from the first angle, and which may be zero in the case in which the first angle is not zero, around its direction of travel towards the other tapered plate it emerges from that other tapered plate as angularly separated rays which are not focused onto the core of the optical fibre whose end follows that other tapered plate in the direction of travel of the light.

2. An optical arrangement as claimed in claim 1, wherein the tapered plates of birefringent material are arranged with their respective optical axes rotated, one with respect to the other, by the first angle, around a forward direction of travel of light in the arrangement.

3. An optical arrangement as claimed in claim 1 or 2, wherein the said element is a 45° Faraday rotator, and the tapered plates are arranged so that light travelling in a forward direction of the arrangement, from an input side of the arrangement to an output side, is focused on the end of the optical fibre at the output side, and so that light travelling in the reverse direction of the arrangement is not focused on the end of the optical fibre at the input side.

4. An optical arrangement as claimed in claim 3, wherein the optical axis of the output side tapered plate is rotated by 45°, around the said forward direction of the arrangement, with respect to the optical axis of the input side tapered plate.

5. An optical arrangement as claimed in claim 1 or 2, wherein the said element comprises an electrooptic crystal, for example of zinc telluride or gallium arsenide.

6. An optical arrangement as claimed in any preceding claim, wherein the birefringent material of the tapered plates is rutile or calcite.

7. An optical arrangement as claimed in any preceding claim, wherein the two optical fibres are both single mode fibres, or are both multimode fibers.

## Patentansprüche

1. Optische Anordnung zur selektiven optischen Kopplung von einander gegenüberliegenden Enden von zwei optischen Fasern der Anordnung, welche ferner umfaßt:—

ein Paar von Linsen, die in einem optischen Weg zwischen den gegenüberliegenden Enden der beiden optischen Fasern angeordnet sind,

ein Paar von Platten aus doppelbrechendem Material, die zwischen den beiden Linsen in dem optischen Weg angeordnet sind, und

ein Element, das zwischen den beiden Platten angeordnet ist und zur Änderung der Polarisationsebenen sowohl der ordentlichen als auch der außerordentlichen Komponenten des hindurchtretenden Lichtes dient,

dadurch gekennzeichnet, daß:—

die beiden Linsen so angeordnet sind, daß die einander gegenüberliegenden Enden der beiden optischen Fasern in Brennpunktpositionen der entsprechenden Linsen angeordnet sind, die jeweils die Kollimierung des von dem optischen Faserende in der Brennpunktebene emittierte Licht derselben in parallele Strahlen bewirken; und

die beiden Platten aus doppelbrechendem Material keilförmige Platten sind, die dazu dienen, Licht mit verschiedenen Polarisationsebenen winkelmäßig zu trennen und winkelmäßiges Licht von verschiedenen Polarisationsebenen zu kombinieren,

und die Anordnung so konstruiert ist,

daß dann, wenn die Polarisationsebene des von einer der keilförmigen Platten emittierten Lichtes durch das genannte Element um einen ersten Winkel, der Null sein kann, um seine Fortpflanzungsrichtung zu der anderen keilförmigen Platte hin rotiert wird, es von der anderen keilförmigen Platte als parallele Strahlen austritt, welche, durch die zwischen dem betreffenden optischen Faserende und der anderen keilförmigen Platte angeordnete Linse, auf den Kern der optischen Faser abgebildet werden, deren Ende in Fortpflanzungsrichtung des Lichtes hinter der anderen keilförmigen Platte angeordnet ist,

und daß dann, wenn die Polarisationsebene des von einer der keilförmigen Platten austretenden Lichtes von dem genannten Element um ihre Fortpflanzungsrichtung zu der anderen keilförmigen Platte um einen zweiten Winkel rotiert wird, der sich um π/2 von dem ersten Winkel unterscheidet, und welcher Null sein kann, wenn der erste Winkel nicht Null ist, es von der anderen keilförmigen Platte als winkelmäßig getrennte Strahlen austritt, welche nicht auf den kern der optischen Faser fokussiert sind, deren Ende in Fortpflanzungsrichtung des Lichtes hinter der anderen keilförmigen Platte angeordnet ist.

2. Optische Anordnung nach Anspruch 1, bei welcher die keilförmigen Platten aus doppelbrechendem Material mit ihren jeweiligen optischen Achsen eine gegenüber der anderen um den ersten Winkel um die Vorwärtsrichtung der Fortpflanzung des Lichtes in der Anordnung rotiert angeordnet sind.

3. Optische Anordnung nach Anspruch 1 oder 2, bei welcher das genannte Element ein 45°-Faraday-Rotator ist und die keilförmigen Platten so angeordnet sind, daß Licht, welches sich in Vorwärtsrichtung der Anordnung von einer Eingangsseite der Anordnung zu einer Ausgangsseite fortpflanzt, auf das Ende der optischen Faser an der Ausgangsseite fokussiert wird, und so das Licht, welches sich in umgekehrter Richtung durch die Anordnung fortpflanzt, nicht auf das Ende der optischen Faser an der Eingangsseite fokussiert wird.

4. Optische Anordnung nach Anspruch 3, bei welcher die optische Achse der ausgangsseitigen keilförmigen Platte bezüglich der optischen Achse der eingangsseitigen keilförmigen Platte um 45° um die genannte Vorwärtsrichtung der Anordnung rotiert ist.

5. Optische Anordnung nach Anspruch 1 oder 2, bei welcher das genannte Element einen elektrooptischen Kristall umfaßt, z.B. aus Zinktellurid oder Galliumarsenid.

6. Optische Anordnung nach einem der vorhergehenden Ansprüche, bei welcher das doppelbrechende Material der keilförmigen Platten Rotil oder Kalzit ist.

7. Optische Anordnung nach einem der vorhergehenden Ansprüche, bei welcher die beiden optischen Fasern beide Einmodenfasern oder beide Vielfachmodenfasern sind.

**Revendications**

1. Dispositif optique de couplage optique sélectif d'extrémités opposées de deux fibres optiques de dispositif, ce dispositif comportant en outre une paire de lentilles disposées dans un trajet optique entre les extrémités opposées des deux fibres optiques, une paire de plaques de matière biréfringente intercalées entre les deux lentilles dans le trajet optique et un élément, intercalé entre les deux plaques, ayant pour fonction de changer les plans de polarisation des composantes de rayon ordinaire et de rayon extraordinaire de la lumière qui traverse, caractérisé en ce que les deux lentilles sont disposées de manière que les extrémités opposées des deux fibres optiques soient situées en des positions focales des lentilles respectives, chaque lentille ayant pour effet de collimater la lumière émise par l'extrémité de la fibre optique dans une position focale en des rayons parallèles et les deux plaques de matière biréfringente étant des plaques prismatiques ayant pour effet de séparer angulairement la lumière de plans différents de polarisation et de combiner angulairement la lumière de plans différents de polarisation, la disposition étant telle que lorsque le plan de polarisation de la lumière émergeant de l'une des plaques prismatiques est tournée par ledit élément d'un premier angle, qui peut être zéro, autour de sa direction de propagation vers l'autre plaque prismatique, elle émerge de cette autre plaque prismatique sous forme de rayons parallèles qui sont focalisés sur l'âme de la fibre optique dont l'extrémité suit cette autre plaque prismatique dans la direction de propagation de la lumière, par la lumière intercalée entre l'extrémité de la fibre optique concernée et l'autre plaque prismatique, et de manière que si le plan de polarisation de la lumière émergeant de l'une des plaques prismatiques est tournée par ledit élément d'un second angle différent de π/2 du premier angle, et qui peut être zéro dans le cas où le premier angle n'est pas zéro, autour de sa direction de propagation vers l'autre plaque prismatique, elle émerge de cette autre plaque prismatique sous forme de rayons séparés angulairement qui ne sont pas focalisés sur l'âme de la fibre optique dont l'extrémité suit cette autre plaque prismatique dans la direction de propagation de la lumière.

2. Dispositif optique selon la revendication 1, dans lequel les plaques prismatiques de matière biréfringente sont disposées avec leurs axes optiques respectifs tournés l'un par rapport à l'autre du premier angle autour de la direction directe de propagation de la lumière dans le dispositif.

3. Dispositif optique selon la revendication 1 ou 2, dans lequel ledit élément est un rotateur de Faraday de 45°, et les plaques prismatiques sont disposées de manière que la lumière qui se propage dans une direction directe dans le dispositif, depuis un côté d'entrée du dispositif vers un côté de sortie, soit focalisé sur l'extrémité de la fibre optique sur le côté de sortie, et de manière que la lumière se propageant dans le sens inverse du dispositif ne soit pas focalisée sur l'extrémité de la fibre optique sur le côté d'entrée.

4. Dispositif optique selon la revendication 3, dans lequel l'axe optique de la plaque prismatique du côté de sortie est tourné de 45° autour de ladite direction directe du dispositif par rapport à l'axe optique de la plaque prismatique du côté d'entrée.

5. Dispositif optique selon la revendication 1 ou 2, dans lequel ledit élément consiste en un cristal électro-optique, par exemple de tellurure de zinc ou d'arséniure de gallium.

6. Dispositif optique selon l'une quelconque des revendications précédentes, dans lequel la matière biréfringente des plaques prismatiques est du rutile ou de la calcite.

7. Dispositif optique selon l'une quelconque des revendications précédentes, dans lequel les deux fibres optiques sont toutes deux des fibres en mode simple ou des fibres en mode multiple.

FIG.1

FIG. 2

FIG.3A

FIG.3B

FIG.3C

## FIG. 4A

## FIG. 4B

## FIG. 5

FIG. 6A

FIG. 6B

FIG. 7A

FIG. 7B

FIG. 7C

FIG. 7D